(19)

Europäisches Patentamt
European Patent Office
Office européen des brevets

(11) **EP 2 784 746 A1**

(12) **EUROPEAN PATENT APPLICATION**

(43) Date of publication:
**01.10.2014  Bulletin 2014/40**

(21) Application number: **14156743.8**

(22) Date of filing: **26.02.2014**

(51) Int Cl.:
*G06T 1/00* (2006.01)   *G06T 7/00* (2006.01)
*H04N 5/232* (2006.01)   *H04N 1/00* (2006.01)
*H04N 1/193* (2006.01)   *H04N 1/195* (2006.01)
*H04N 3/14* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **29.03.2013  JP 2013072120**

(71) Applicant: **OMRON CORPORATION
Kyoto, Kyoto 600-8530 (JP)**

(72) Inventors:
• **Takayama, Masahiro
  Kyoto, Kyoto 600-8530 (JP)**
• **Sawa, Shinya
  Kyoto, Kyoto 600-8530 (JP)**

(74) Representative: **Horn Kleimann Waitzhofer
Ganghoferstrasse 29a
80339 München (DE)**

(54) **Setting up an area sensing imaging system to capture single line images**

(57)   To facilitate imaging setup when an area-type imaging element is used as a line camera, an image processing system includes an imaging device and an image processing device connectable to the imaging device. The imaging device includes an area-type imaging element, an area imaging control means, and a line imaging control means that acquires a one-dimensional image from a predetermined specific pixel line from among the plurality of pixels. The system also includes an input means that takes in the image acquired by the imaging device; an indicator acquisition means that acquires an indicator value used to evaluate an imaging state of a specific pixel line from the acquired two-dimensional image; and an output means that outputs the two-dimensional image, and the acquired indicator value, to a display to guide a user in designating a pixel line as said predetermined specific pixel line.

FIG. 10

## Description

### FIELD

The present invention relates to an image processing system and an image processing program, and more specifically relates to an image processing system and image processing program that facilitates imaging setup.

### BACKGROUND

Industrial cameras may be largely divided into two categories: area cameras that employ an area sensor, and line cameras that employ a line sensor.

Although the area camera is generally used, the line camera is usually more suitable in cases requiring higher resolutions, such as for the sheet inspection on a print production line, or for the Liquid Crystal Display (LCD) and Plasma Display Panel (PDP) inspection on a liquid crystal and glass production line, or for the surface inspection of a cylindrical work.

Conventionally, charge-coupled devices (CCD) are generally used as imaging devices, and said imaging devices may be employed as either area sensors or line sensors. There are CCD area sensors which have a partial read function for reading a specific line. Further, in recent years, Complementary Metal Oxide Semiconductor (CMOS) image sensors have also come into use which have greatly improved imaging resolution and speed. There are CMOS area sensors capable of random access by the pixel, and thus it is possible to employ this function to thereby use the CMOS area sensor as a line sensor. Moreover, given that there are more area sensors available on the market, as long as the resolution is the same level, the area sensor is comparatively cheaper than the line sensor. Accordingly, there are technologies proposed which use an area sensor as a line camera.

For example, a camera may be provided with an area sensor, and a control circuit for controlling the area sensor (refer to Patent Document 1). More specifically, the control circuit includes an area sensor control means which controls normal capture of an image, and a line sensor control means which controls one-dimensional capture by scanning a specific scanning line, and selects one of either the area sensor control means or the line sensor control means. When setting up a lens and so forth, the control circuit operates the area sensor and uses the captured image as a viewfinder.

Alternatively, a CMOS area sensor may be disposed to largely coincide with a main scanning direction which is orthogonal to the transfer direction of the object being observed. The CMOS area sensor randomly accesses and reads only the pixels capturing the read line, which is a straight area in the main scanning direction (refer to Patent Document 2). Given that the CMOS camera may slightly shift or slant front or back, side-to-side, and up or down, a single one-dimensional image may be produced by correcting the image that was read. A correction factor is determined from a test chart where a reference line is drawn on top of the read line.

References

Patent Documents

Patent Document 1: Japanese Unexamined Patent Publication No. 2004-147271
Patent Document 2: Japanese Unexamined Patent Publication No. 2009-194424

### SUMMARY

When an area sensor is used as a line camera, a user may wish to adjust and set various imaging conditions such as the attitude of the camera, the brightness of the lighting and so forth.

However, Patent Document 1 does not disclose specifically how to set up the area sensor as a line camera while observing the viewfinder image.

In Patent Document 2, processing takes time because corrections are made each time the device is operated. Furthermore, while adjustments to the focal distance of the camera, and to the position of the lighting are also needed, these methods are not disclosed.

Consequently, the present invention aims to provide an image processing system, and image processing program which facilitates imaging setup when an area-type imaging element is used as a line camera.

According to one aspect of the invention, an image processing system includes an imaging device for capturing an image of an object to be imaged, and an image processing device configured to be connected to the imaging device; the imaging device includes an area-type imaging element including a plurality of imaging pixels arranged in two dimensions; an area imaging control means that acquires a two-dimensional image from the plurality of pixels; and a line imaging control means that acquires a one-dimensional image from a predetermined specific pixel line from among the plurality of pixels in the area-type imaging element.

The image processing system includes a switchover control means that switches to and thus activates one of either the area imaging control means or the line imaging control means; an input means that takes in the image acquired by the imaging device; an indicator acquisition means that acquires an indicator value used to evaluate an imaging state of a specific pixel line in the plurality of pixels from the two-dimensional image read by the input means; and output means that outputs the two-dimensional image taken in by the input means, and the indicator value acquired by the indicator acquisition means; and a designation means that designates a specific pixel line from among the plurality of pixels.

An indicator value may include an angle formed between a line corresponding to a specific pixel line in the two-dimensional image, and an edge extracted from an image of the object being imaged in the two-dimensional image.

An indicator value may include a brightness value for a line in a main scanning direction corresponding to a specific pixel line in the two-dimensional image.

The output means may output points representing each of the brightness values in a specific pixel line on a graph plotted in a sub-scanning direction which is orthogonal to the main scanning direction.

The output means may output points representing each of the brightness values in a specific pixel line extending in the sub-scanning direction which is orthogonal to the main scanning direction on a graph plotted in the main scanning direction.

Further provided is an operation input means which receives operations from outside the device, where a specific pixel line may be designated by the designation means from among the plurality of pixels in accordance with operation details received by the operation input means.

The designation means may designate a specific pixel line from among the plurality of pixels using a brightness value. An indicator value may include a value representing the amount of adjustments to the focus of the imaging device in a region including the specific pixel line from among the two-dimensional image.

According to other aspects of the invention there is provided an image processing program configured to be run on a computer connectable to the imaging device that captures an image of an object to be imaged.

The imaging device includes an area-type imaging element including a plurality of imaging pixels arranged in two dimensions; an area imaging control means that acquires a two-dimensional image from the plurality of pixels; and a line imaging control means that acquires a one-dimensional image from a predetermined specific pixel line from among the plurality of pixels in the area imaging element.

The image processing program causes the computer to function as device including a switchover control means that switches to and thus activates one of either the area imaging control means or the line imaging control means; an input means that takes in the image acquired by the imaging device; an indicator acquisition means that acquires an indicator value used to evaluate an imaging state of a specific pixel line in the plurality of pixels from the two-dimensional image taken in by the input means; and output means that outputs the two dimensional image acquired by the input means, and the index values read by the indicator acquisition means; and a designation means that designates a specific pixel line from among the plurality of pixels.

According to the present invention, imaging setup can be easily performed by facilitating the user in performing the imaging setup.

## BRIEF DESCRIPTION OF THE DRAWINGS

FIG. 1 is a schematic view of the overall configuration of a visual sensor system including an image processing device according to an embodiment of the invention;
FIG. 2 is a schematic view of a camera and the image processing device according to an embodiment of the invention;
FIG. 3 is a function configuration diagram according an embodiment of the present invention;
FIG. 4 is a flow chart illustrating an outline of processes during an adjustment mode according to an embodiment of the invention;
FIG. 5 is a flow chart illustrating processes during a first camera attitude setup according to an embodiment of the invention;
FIG. 6 is a diagram illustrating an example of a screen displayed during the process illustrated in FIG. 5;
FIG. 7 is a flow chart illustrating processes during a second camera attitude setup according to an embodiment of the invention;
FIG. 8 is a diagram illustrating an example of a screen displayed during the process illustrated in FIG. 7;
FIG. 9 a diagram illustrating the setting up of a lighting device according to an embodiment of the invention;

FIG. 10 is a diagram illustrating an example of a display screen for a brightness profile according to an embodiment of the invention;

FIG. 11 is a diagram illustrating an example of a display screen for facilitating focus adjustment according to an embodiment of the invention.

DETAILED DESCRIPTION

Embodiments of the present invention will be described in detail with reference to the drawings. The same or corresponding elements within the drawings will be given the same reference numerals and the explanations therefor will not be repeated.

Overall Device Configuration

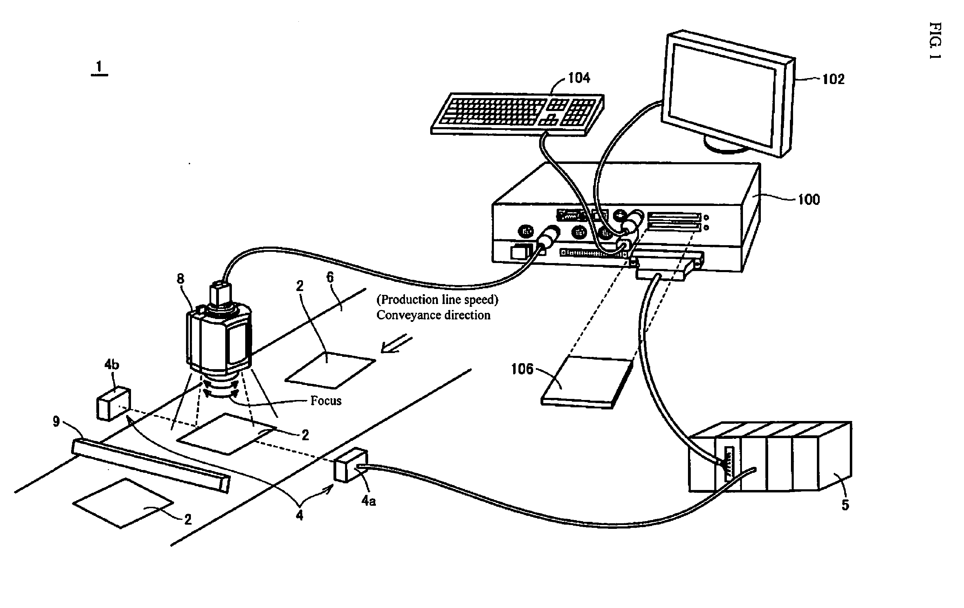

FIG. 1 is a schematic view of the overall configuration of a visual sensor system including an image processing device 100 according to an embodiment of the invention.

Referring to FIG. 1, the visual sensor system may be incorporated in a production line, whereby objects to be observed (referred to below as a "work 2") are inspected for the presence or absence of defects or dirt, are measured to determine the size thereof, or are inspected so that characters or drawings on the surface thereof may be identified. As an example, in the present embodiment a conveyance mechanism 6 such as a conveyor belt transports the work 2, and a camera 8 which is the imaging device captures an image of the work 2. The image data (referred to below as an "input image") obtained by the camera 8 is transmitted to the image processing device 100. The visual inspection system 1 is further provided with a lighting device 9 that irradiates the work 2 which will be captured by the camera 8 with light. While in this embodiment the camera 8 does not move and has a fixed position, as is later described, the attitude of the camera 8 may be freely modified and set.

An optoelectronic sensor 4 placed at both ends of the conveyance mechanism 6 may be used to detect when the work 2 arrives within the imaging range of the camera 8. More specifically, the optoelectronic sensor 4 includes a light receiving part 4a, and a light projection part 4b which are placed on the same optical axis; the work 2 blocks the light emitted from the light projection part 4b, which is detected by the light receiving part 4a to thereby detect the arrival of the work 2. A detection signal (referred to below as a "trigger signal") from the optoelectronic sensor 4 is output to a Programmable Logic Controller (PLC) 5.

The PLC 5 operates to receive the trigger signal from the optoelectronic sensor 4 as well as to control the conveyance mechanism 6.

The visual sensor system 1 further includes an imaging processing device 100, a display 102, and an input device 105. The image processing device 100 may be connected to the PLC 5, the camera 8, the display 102, and the input device 105.

The image processing device 100 includes a measurement mode for performing various types of image processing on the work 2, and an adjustment mode for carrying out various adjustments of the imaging setup. In measurement mode, when the image processing device 100 receives the trigger signal from the optoelectronic sensor 4 via the PLC 5, the image processing device 100 provides an imaging instruction to the camera 8. The camera 8 captures an image of the work 2 in response to the imaging instruction, and thus obtains an input image which is transmitted to the image processing device 100. Alternatively, the image processing device 100 may take in only the necessary input images on receiving the trigger signal while allowing the camera 8 to continuously capture images.

The present embodiment allows for modification of the imaging setup. Modifying the imaging setup may include modifying the attitude (angle), the aperture size (brightness), the focus, the detection sensitivity (ISO sensitivity), and the light exposure time (shutter speed) for the camera 8. The camera attitude represents the inclination of the optical system lens in the camera 8 in relation to the work 2. Furthermore, the imaging setup may include modifying the radiation direction, and the radiation intensity (brightness) of the lighting device 9. A typical imaging setup in the present embodiment includes modifying the focus, and the attitude of the camera 8, as well as modifying the radiation direction and the radiation intensity of the lighting device 9. Moreover, the present invention may be adapted for a camera 8 and a lighting device 9 where at least one parameter from the above described imaging setup can be modified.

More specifically, the camera 8 includes an optical system having an adjustable focus. That is, a focus adjustment ring is installed on the camera 8 for adjusting the focus of the optical system. In an adjustment mode the image processing device 100 carries out certain processes (later described) and consequently displays an information screen used for supporting a user (an operator) in adjusting the focus. In other words, the user operates the focus adjustment ring to obtain the most suitable focus, and adjusts the attitude of the camera 8 with respect to the work 2 on the basis of an indicator value, which is displayed for example on the display 102, and is used for evaluating the imaging state of the input image acquired by the camera 8. The camera 8 and the lighting device 9 may be mounted on a support member (not shown) so as to be installable or removable from the support member, and the user may change the installation angle of the support member. Thus, an angle in a tilt direction and an incline (an angle about the optical axis) of the camera 8 as well as an angle in the radiation direction of the lighting device 9 may be adjusted by changing the installation angle of the support member and so forth.

The image processing device 100 is a computer with a general-purpose architecture, and provides various functions (later described) by executing a pre-installed program. When using such a general purpose computer, an operating system (OS) may also be installed to provide the computer with basic functions in addition to an application installed to provide a function according to the present embodiment. When an operating system is installed, the program provided according to the present embodiment may call on necessary modules from among the program modules provided as a part of the OS in a predetermined sequence at predetermined times in order to carry out relevant processes. In other words, while the program itself according to the present embodiment does not contain the above mentioned modules, the program can carry out processing in collaboration with the OS. The program according to the present embodiment may exclude those modules that are provided as a part of the OS.

Moreover, the program according to the present embodiment may be combined with and provided as one part of another program. In that case, although as above described the program itself does not include the modules contained in the other program with which it is combined, the program may collaborate with the other program to carry out processing. In other words, the program according to the present invention may be configured such that it is incorporated into said other program. Moreover, the functions provided by executing the program may be implemented in whole or in part as a dedicated hardware circuit.

Configuration of the Image Processing Device and the Camera

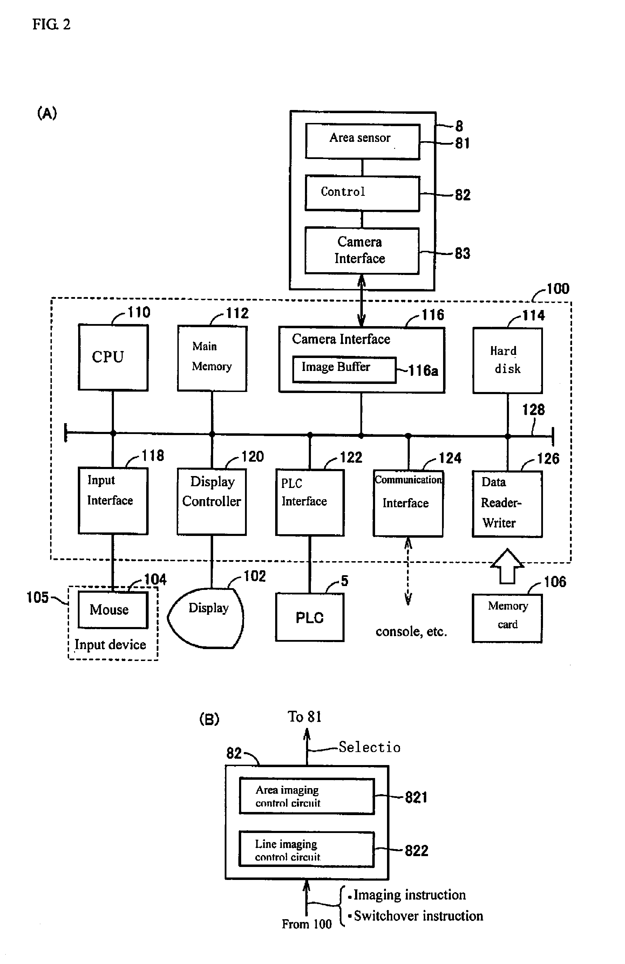

FIG. 2 is a schematic view of the camera 8 and the image processing device according to one embodiment of the invention. Referring to FIG. 2, the image processing device 100 includes a central processing unit (CPU) 110 which is an arithmetic processing unit; a main memory 112 and a hard disk 114 as storage units; a camera interface 116; an input interface 118; a display controller 120; a PLC interface 112; a communication interface 124; and a data reader-writer 126. Each of these components is capable of data communication with each other via a bus 128.

The CPU 110 reads the program (code) stored on the hard disk 114 into main memory 112 and executes the code in a predetermined sequence to thereby carry out various computations. The main memory 112 may be a volatile storage device such as a dynamic random access memory (DRAM) which, in addition to the programs read in from the hard disk 114, stores the input image acquired by the camera 8, and data representing the processing results for the input image and work data and so forth. Additionally, the hard disk 114 is a non-volatile magnetic storage device, and in addition to storing the program executed by the CPU 110, stores various setting values and so forth. The program to be installed on the hard disk 114 may be distributed while stored on a memory card 106 and so forth as is later described. Finally, a semiconductor storage device such as flash memory may be used in addition to or as a substitute for the hard disk 114.

The camera interface 116 mediates the data transmission between the CPU 110 the camera 8. The camera interface 116 is connected to one or more cameras 8; however in the present embodiment, only one camera 8 is connected to the camera interface 116, for the purpose of providing a simplified description. The camera interface 116 includes an image buffer 116a for temporarily storing image data from the camera 8. Further, the camera interface 116 supplies an imaging instruction to the camera 8 in accordance with an internal command issued by the CPU 110.

The input interface 118 mediates the data transmission between the CPU 110 and an input device 105 such as a keyboard, a mouse 104, and a touch panel. Namely, the input interface 118 receives operation instructions provided by a user operating the input device 105.

The display controller 120 is connected to a display 102 which is one example of a display device, and controls the display to notify the user of an image processing result from the CPU 110.

The PLC interface 122 mediates the data transmission between the CPU 110 and the PLC 5. More specifically, the PLC interface 122 transmits information regarding the status of the production line being controlled by the PLC 5 and information regarding the work 2 to the CPU 110.

The communication interface 124 mediates data transmission between the CPU 110 and other personal computers or server devices (not shown). The communication interface 124 may be configured by, for example, Ethernet (Registered Trademark), or a universal serial bus (USB). Finally, instead of installing a program stored on the memory card 106 on the image processing device 100, the program may be installed on the image processing device 100 from a distribution server and so forth via the communication interface 124.

The data reader-writer 126 mediates the data transmission between the CPU 110 and the memory card 106 which is a recording medium. In other words, the program to be executed on the image processing device 100 may be distributed while stored on the memory card 106. The data reader-writer 126 reads the program out from the memory card 106. Additionally the data reader-writer 126 writes the input image acquired by the camera 8 and/or the processing results in the image processing device 100 to the memory card 106 in response to internal commands from the CPU 110. Finally, the memory card 106 may be a general purpose semiconductor storage device such as a Compact Flash (CF) card, and a Secure Digital (SD) card; a magnetic storage medium such as a flexible disk; or an optical storage medium such as compact disk read-only memory (CD-ROM).

Moreover, as necessary, the image processing device 100 may be connected to another output device such as a printer.

Referring to FIG. 2, as an example, in addition to an optical system such as a lens, the camera 8 may include an area sensor 81, a control circuit 82, and a camera interface 83 used for data transmission with the image processing device 100. The camera interface 83 inputs imaging instructions from the image processing device 100.

The area sensor 81 may be configured by an imaging element divided into a plurality of pixels such as a charge-coupled device (CCD) sensor, or a complementary metal-oxide semiconductor (CMOS) sensor. In this embodiment, a CMOS sensor is used for the area sensor. More specifically, the imaging elements corresponding to pixels are arranged as a grid in a two-dimensional plane corresponding to a coordinate system defined by mutually orthogonal X and Y axes, whereby the area sensor 81 outputs a plane image. Accordingly, each pixel may be accessed by specifying a two-dimensional coordinate (X, Y). On the other hand, the line sensor outputs a linear one-dimensional image which corresponds to a pixel line wherein the pixels are lined up in one direction. With this arrangement, the camera 8 includes a camera function that uses the area sensor (also referred to below as an "area camera"), and a camera function that uses the line sensor (also referred to below as a "line camera").

The control circuit 82 may use a selection signal to randomly select or access, by the pixel, a two-dimensional plane wherein the CMOS sensor cells corresponding to the pixels in the area sensor 81 are arranged as a grid. The control circuit 82 performs an analog to digital conversion (A/D conversion) of the electrical signal output from the selected pixel, and outputs the digital data obtained via the conversion to the image processing device 100 via the camera interface 83. The image processing device 100 stores the digital data from the camera 8 in the image buffer 116a of the camera interface 116. The image stored in the image buffer 116a represents bitmap data of, for example, a gray scale of 256 gradient values.

The control circuit 82 includes an area imaging control circuit 821,and a line imaging control circuit 822. The control circuit 82 selects one of the area imaging control circuit 821 and the line imaging control circuit 822 on the basis of a switchover instruction from the image processing device 100. The selected control circuit is activated, while the non-selected control circuit is halted. The control circuit 82 will make the selection again on receiving input of the next switchover instruction from the image processing device 100. Accordingly, the activated circuit remains in an imaging-capable state until the next switchover instruction is input. The CPU 110 of the image processing device 100 includes a function that acts as a switchover control unit that switches to and thus activates one of either the area imaging control circuit 821 or the line imaging control circuit 822, and the switchover control unit outputs the above mentioned switchover instruction to the camera 8.

On activation, the area imaging control circuit 821 generates a selection signal for accessing the pixels corresponding to the imaging field of view of all the pixels in the area sensor 81 on the basis of the imaging instruction, and accesses the pixels in accordance with the generated selection signal. Hereby the two-dimensional image read from the area sensor 81 can be stored in the image buffer 116a. The two-dimensional image corresponds to an area image having a size corresponding to the imaging field of view of the camera eight which contains one portion of the conveyance plane. Whereas, on activation, the line imaging control circuit 822 generates a selection signal for accessing a specific pixel line specified by line selection data contained in the imaging instruction, and accesses the pixels in accordance with the generated selection signal. Hereby, a linear one-dimensional image (also referred to as a line image below) which corresponds to a specific pixel line in the area sensor 81 may be stored in the image buffer 116a.

When at least one frame of the input image data is accumulated in the image buffer 116a, the camera interface 116 forwards the accumulate data to the main memory 112. In this case, the two-dimensional image or the one-dimensional image corresponds to one frame of the input image.

A basic method of using a line camera involves transporting the work 2, that is the object to be imaged, at a predetermined speed in a fixed direction while repeatedly capturing images; the image processing device 100 then combines the line images output at each image capture in order to obtain an image. For instance, when performing defect inspection, the inspection can be carried out using a single line image without combining the line images.

When an image is captured using a line camera, the image is divided into a plurality of line images and then taken in. Scanning in the direction the line extends is called main scanning, while moving to the next line is called sub scanning. Further, the direction in which the line extends is called the main scanning direction, and the direction of movement is called the sub-scanning direction. In the present embodiment, the speed and the direction of movement coincide with the conveyance direction and the conveyance speed used by the conveyance mechanism 6.

Overview

The image processing device 100 according to the present embodiment has functions that facilitate the setting of the attitude and the focus for the camera 8, and the setting of the radiation direction and radiation intensity of the lighting device 9 which are typical examples of an imaging setup. These setting functions are basically provided during the adjustment mode. Moreover, in the case where the lighting environment may change during measurement (for example, where sunlight is used for lighting) these setting functions may also be carried out during the measurement mode.

To support imaging setup, the image processing device 100 computes an indicator value used for evaluating the imaging state of the input image captured by the camera 8, and outputs an adjustment support screen including this indicator value. The indicator value is a reflection of the suitability of the imaging setup; therefore, the user may adjust the camera 8 or the lighting device 9 so that the indicator value being displayed becomes a more suitable value, to thereby more easily perform more appropriate imaging setup of the camera 8 or of the lighting device 9. Given that the methods used during the measurement mode are known, a description thereof will not be repeated here.

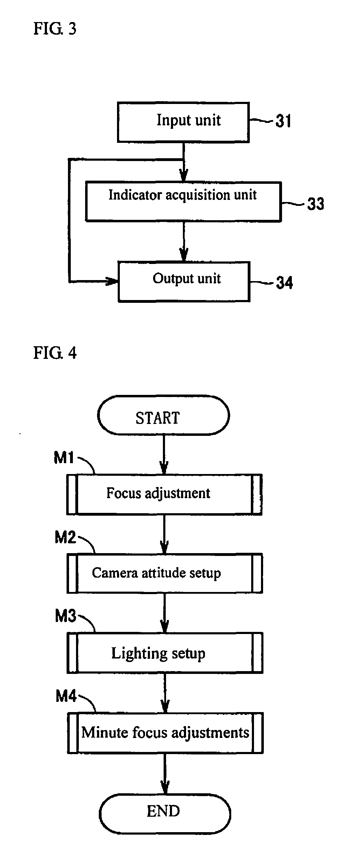

FIG. 3 is a function configuration diagram according an embodiment of the present invention. Referring to FIG. 3 the CPU 110 may function as an input unit 31 corresponding to the camera interface 116 which takes in an image acquired through image capture by the camera 8, an indicator acquisition unit 33 which acquires an indicator value for evaluating the imaging states of the two-dimensional image or the line image, and the output unit 34 corresponding to the display controller 120 which outputs the acquired indicator value. These functions may be constituted by a combination of programs executed by the CPU 110 and circuits.

FIG. 4 is a flow chart illustrating an outline of processes during an adjustment mode according to an embodiment of the invention. The process is illustrated in FIG. 4 are initiated by the user executing predetermined operations during the adjustment mode.

In the processes in FIG. 4, the work 2 is positioned in the imaging field of view of the camera 8 while the conveyance mechanism 6 is stopped, and light from the lighting device 9 illuminates the imaging field of view. During this state, the CPU 110 outputs an imaging instruction and a switchover instruction, operating the camera 8 as an area camera. The CPU 110 reads the input image from the area camera out of the image buffer 116a, and for example displays the image on the display 102.

While verifying the two-dimensional image being displayed, the user may manipulate the focus adjustment ring of the camera 8 to adjust the focus of the camera 8 (step M1), and adjust and set the imaging direction of the camera 8, or in other words the attitude of the camera 8 (step M2). While making adjustments to the camera, to ensure accurate inspection, in step M2 the user may set the attitude of the camera 8 so that the inclination angle of the optical axis of the camera 8 is orthogonal to the imaging field-of-view plane. In the present embodiment, a user interface for facilitating imaging setup is provided by a first camera attitude setup or a second camera attitude setup, which will be described later.

Further, while observing the two-dimensional image the user may set the radiation direction and the radiation intensity (brightness) of the light from the lighting device 9, and selectively designate the most suitable line image to be used for the inspection (step M3). When setting up the lighting device 9, the radiation direction may be set by adjusting the attitude of the lighting device 9; furthermore the radiation intensity may be set by operating a button and so forth. While verifying the two-dimensional image and the indicator value being displayed, the user may perform focus adjustment to optimize the focal distance to the designated line in the area sensor 81, in other words the user may adjust the focus to bring the line image into focus. (step M4). In steps M2-M4, the indicator acquisition unit 33 obtains the indicator value used for evaluating the imaging state from the input image captured by the camera 8, and the output unit 34 displays the indicator value on the display 102 in association with the input image. The particulars will be described below.

First Camera Attitude Setting

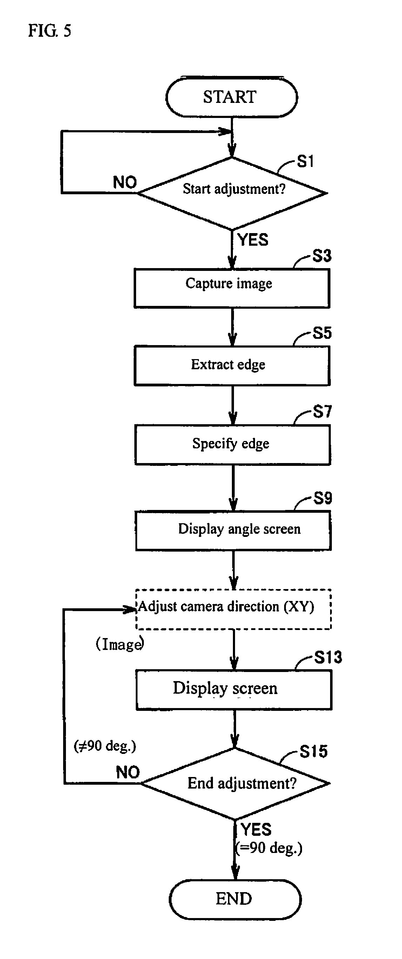

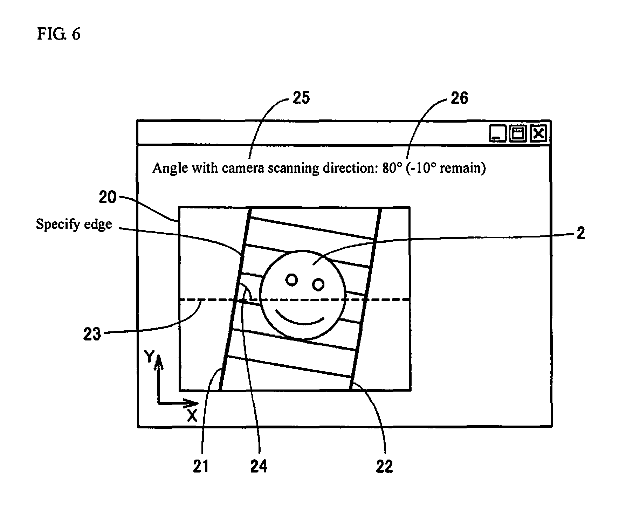

First, the first camera attitude setup in step M2 will be described. FIG. 5 is a flow chart illustrating processes during a first camera attitude setup according to an embodiment of the invention. FIG. 6 is a diagram illustrating an example of a screen displayed during the process illustrated in FIG. 5. FIG. 6 illustrates the two-dimensional image 20 output from the area camera when an image is captured of the work 2.

Referring to FIG. 5, when the user operates, for example, a button on the input device 105, the CPU 110 determines whether or not an instruction to initiate an adjustment was input using an operation instruction representing operation content received by the input unit 31. Although step S1 repeats while the CPU 110 determines that an adjustment is not being initiated ("NO" at step S1), the CPU 110 outputs and imaging instruction, and the camera 8 outputs the two-dimensional image captured in accordance with the imaging instruction (step S3) when the CPU 110 determines that an adjustment was initiated ("YES" at step S1).

The CPU 110 extracts an edge part on the basis of pixel values from the two-dimensional image 20 in the image buffer 116a (step S5). After the extraction, the edge part extracted from the two-dimensional image 20 represents a portion of the conveyor belt in the conveyance mechanism 6 and corresponds to an end part extending in the conveyance direction. Finally, well-known image processing techniques may be adopted for edge extraction, and thus a detailed description thereof will not be repeated here.

The screen in FIG. 6 illustrates an example where the CPU 110 displays the captured two-dimensional image

7

20 with the extracted edge parts 21 and 22 highlighted. Additionally, the CPU 110 displays the two-dimensional image 20 with a guide line 23 which extends in the main scanning direction superimposed on the two-dimensional image 20. Further, the guideline 23 is displayed at a predetermined position. The user operates a mouse 104 while viewing the image in FIG. 6 to designate, for instance a desired edge part such as the edge part 21 (step S7).

On detecting that the edge part 21 was designated using the operation details received by the input unit 31, the CPU 110 detects the position of the edge part 21 from the two-dimensional image 20 in the image buffer 116a. The indicator acquisition unit 33 computes an angle 24 formed by the edge part 21 representing the detected position, and the above mentioned guide line 23, and computes the difference (difference in angles) between 90° and the angle 24. The angle of "90°" is based on the fact that the main scanning direction which is the X axis and the sub scanning direction which is the Y axis are orthogonal to each other. The output unit 34 then controls the display 102 to display information 25 representing the computed angle 24, and information 26 representing the difference in angles along with the two-dimensional image 20 on the same screen (step S9). The CPU 110 also displays an image of the above mentioned X and Y axes related to the area sensor 81 in association with the two-dimensional image 20 on the screen in FIG. 6.

The user adjusts the attitude of the camera 8 in the direction of the X and Y axes being displayed on the basis of the angle information 25 and the angle information 26; and thereafter, the CPU 110 carries out image processing once the user operates the imaging button and so forth on the input device 105. More specifically, an imaging instruction is output, and a two-dimensional image 20 that was captured is input. The angle 24 and the difference in angles are once again computed for the input image. The inputted two-dimensional image 20, and the calculated information 25 and 26, which represent angles, are displayed on the display 102 (step S13). Hereby, using the image captured after adjusting the camera attitude, the user may determine whether or not the adjustment was suitable by reviewing the information 25 or 26 which are displayed again. For example, when the information 25 represents an angle 24 of 90° (in other words, the information 26 represents 0°), the user determines that the adjusted attitude is suitable, and then operates a button on the input device 105 to end the adjustment. Finally the CPU 110 may output a message to indicate that the attitude adjustment is complete when the CPU 110 determines that the angle 24 is 90°, and the difference in angles is 0°.

When the CPU 110 determines from the operation details that the input unit 31 received an operation instruction to end the adjustment (YES at step S15), the series of processes illustrated in FIG. 5 ends. On the other hand, when the CPU 110 determines that an operation instruction to end the adjustment has not been received (NO at step S15), control returns to step S11 to repeat the process for attitude adjustment of the camera 8.

Although in step S7 an edge part is defined as the portion extending parallel to the conveyance direction (edge parts 21, 22), the portion orthogonal to the conveyance direction, in other words, a portion extending parallel to the main scanning direction may also be defined as such. In that case, the user inputs which of either the former, parallel portion, or the latter, orthogonal portion will be used as the edge part. The CPU 10 extracts the edge portion in a direction the user has designated in accordance with the input information, and displays the edge portion. In this case, the attitude after adjustment is suitable when either the angle 24, or the difference in angles is 0°.

In addition, both the former, parallel portion, and the latter, orthogonal portion may be used as an edge part. When both the former and latter edge parts are used, the information 25 and 26 may each present two kinds of angles, thus supporting a more detailed attitude adjustment.

Second Camera Attitude Setting

The attitude adjustment for the camera 8 is not limited to determining the amount of adjustment (angle) by using the conveyance direction, as in the first camera attitude setup, and the amount of adjustment may be determined from an image of the work 2. In the second camera attitude setup, a user interface is presented for facilitating such a setup.

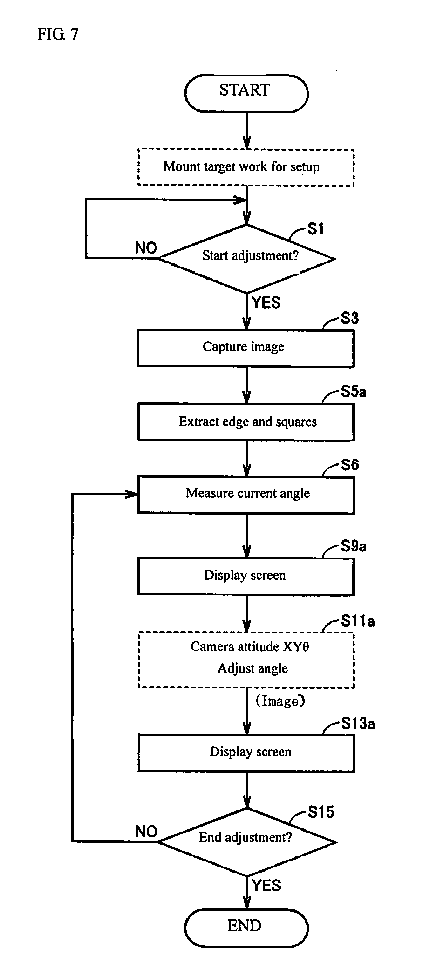

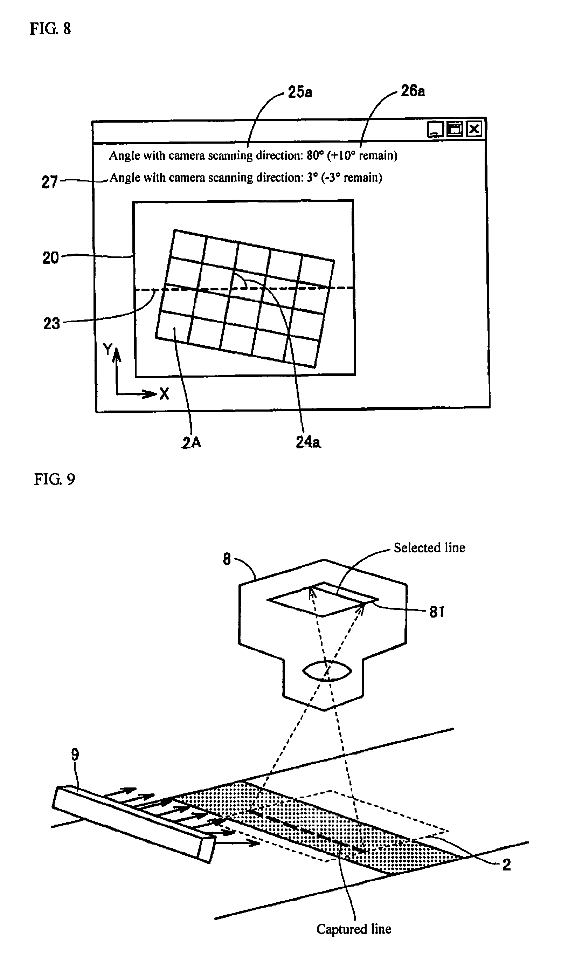

FIG. 7 is a flow chart illustrating processes during a second camera attitude setup according to an embodiment of the invention. FIG. 8 is a diagram illustrating an example of a screen displayed during the process illustrated in FIG. 7. FIG. 8 illustrates the two-dimensional image 20 output from the area camera when an image of the work 2 is captured. Here, a sheet with a graph paper pattern drawn thereon is used as a representation of the work 2 used for attitude adjustment (also referred to below as target work 2A).

Referring to FIG. 8, the user places the target work 2A within the imaging field of view so that the directions in which the straight lines for the squares in the graph paper extend coincide with the conveyance direction; the user then operates a button on the input device 105 to input an operation instruction to initiate an adjustment.

When an operation instruction is input, steps S1 and S3 are carried out in the same manner as in FIG. 5, and the two-dimensional image 20 captured is stored in the image buffer 116a.

The CPU 110 extracts the respective local images of the edge parts surrounding the graph paper pattern (referred to as surrounding edge parts), and the squares representing the graph paper squares from the pixel values of the two-dimensional image 20 in the image buffer 116a (step S5a).

The indicator acquisition unit 33 computes an angle (in the X-Y direction) between the surrounding edge parts and the scanning direction, and computes an angle (in the $\theta$ direction) using the degree of coincidence among the shapes of the squares in the graph paper pattern (step S6).

The angle in the scanning direction is computed by detecting the position of the surrounding edge parts from the two-dimensional image 20, and computing the angle 24a between the line of the edge part representing the detected position, and the guide line 23 extending in the main scanning direction (refer to FIG. 8). Additionally, the difference in angles is computed between 90° and the computed angle 24.

Furthermore, the angle from the degree of coincidence between graph paper squares is obtained by computing the tilt angle represented by the size of the distortion involved in a so-called keystone correction. In other words, when the pixel array plane of the area sensor 81, and the imaging field-of-view plane (for example, the conveyance surface) are parallel, all of the graph paper squares are square and are the same size, the above mentioned distortion does not occur and the tilt angle (in the $\theta$ direction) is 0°. Whereas, when the pixel array plane of the area sensor 81, and the imaging field-of-view plane are not parallel, the squares in the graph paper pattern on the two dimensional image 20 distort into a trapezoidal shape, and the graph paper squares do not coincide with each other. When the shapes of the graph paper squares do not coincide, the amount of shift caused by the nonconformity of the shapes due to the distortion is computed; the tilt angle is then computed in accordance with the computed shift amount and a predetermined computational formula.

The screen in FIG. 8 illustrates an example where the CPU 110 displays the captured two-dimensional image 20 with the surrounding edge parts (graph paper pattern) highlighted. Additionally, the user is displayed the two-dimensional image 20 with the guideline 23 extending in the main scanning direction superimposed thereon. Further, the guideline 23 is displayed at a predetermined position.

The CPU 110 displays the information 25a representing the computed angle 24a, the information 26a representing the difference between angles, the two-dimensional image 20, and information 27 representing the computed tilt angle all on the same screen (step S9a). The CPU 110 also displays an image of the above mentioned X and Y axes related to the area sensor 81 in association with the two-dimensional image 20 on the screen in FIG. 8.

The user adjusts the attitude of the camera 8 in the X and Y axes directions displayed on the basis of the angle information 25a, 26a, 27, so that the imaging field-of-view plane and the conveyance surface are parallel, or in other words, so that the optical axis of the camera 8, and the inclination angle in relation to the area sensor 81 (imaging field-of-view plane) is 90° (step S11a). Thereafter, when the user operates an imaging button, the CPU 110 carries out image processing with the adjusted camera attitude. Hereby, the two-dimensional image captured after adjustment of the camera attitude, and the information 25a, 26a, 27 which represent angles which are computed indicator values for the two-dimensional image 20 are displayed on the display 102 (step S13a). The user may assess whether the adjustment was suitable using the redisplayed information 25a, 26a, 27. For example, when the information 25a represents the angle of 90° (in other words, the information 26 represents 0°), and the information 27 represents the angle 0°, the user can decide that the adjusted attitude is suitable, and then operate a button on the input device 105 to end the adjustment.

Moreover, the CPU 110 may output a message to indicate that the attitude adjustment is complete when the CPU 110 determines that the angle 24a is 90°, the difference in angles is 0°, and the tilt angle is 0°.

When the CPU 110 determines from the operation details that the input unit 31 received an operation instruction to end the adjustment (YES at step S15), the series of processes illustrated in FIG. 7 ends. On the other hand, when the CPU 110 determines that an operation instruction to end the adjustment has not been received (NO at step S15), control returns to step S6 to repeat the process for attitude adjustment of the camera 8.

When a target work 2A is used for imaging setup in this manner, the user operations allowing the user to designate the edge part (edge part 21 or 22 in FIG. 6) may be omitted.

Moreover, the image processing device 100 may be provided with both the above mentioned first camera attitude setup and the second camera attitude setup, and activate the setting the user chooses. Both settings may be used in combination. For example, the target work 2A may be captured to input a two-dimensional image, then the attitude of the camera may be adjusted using the first camera attitude setup, and the two-dimensional image captured with the adjusted camera attitude may be adjusted using the second camera attitude setup whereby it is possible to adjust the tilt angle of the camera. Furthermore, these procedures may be adopted in reverse order.

Facilitating the Lighting Setup

During the measurement mode, if the work 2 is being inspected using a line image captured by the line camera, the brightness and the direction of the radiated light need to be set to coincide with the specific line selected using the line selection data to ensure accurate inspection. In the embodiment, a user interface is presented during the above-mentioned step M3 to facilitate this set up.

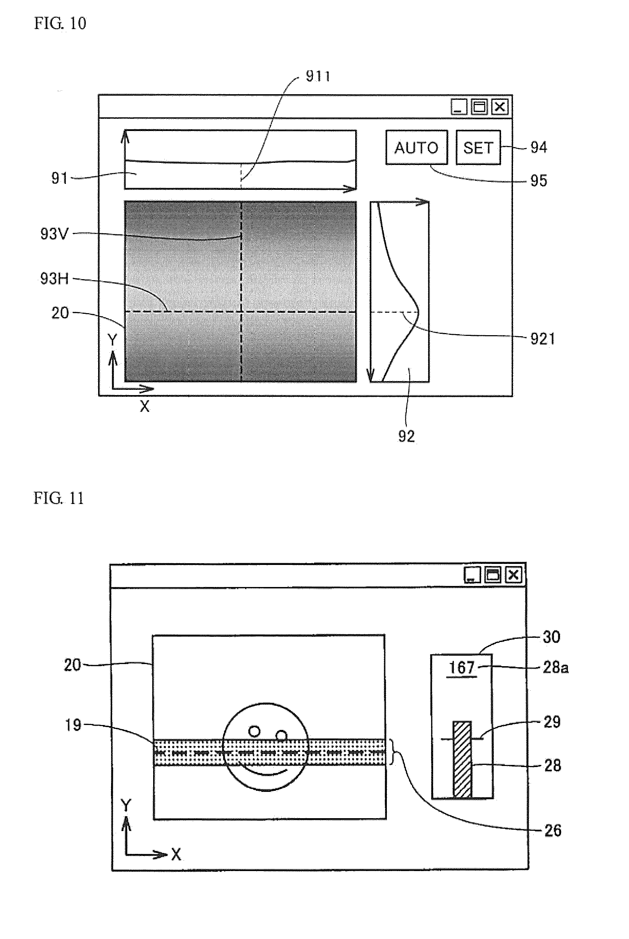

FIG. 9 is a diagram illustrating the setting up of a lighting device according to an embodiment of the invention. FIG. 10 is a diagram illustrating an example of a display screen for a brightness profile according to an embodiment of the invention. The lighting device 9 is installed so as to radiate light in the direction of the imaging region on the conveyance path (refer to FIG. 9). The CPU 110 creates a brightness profile using the two dimensional image 20 which is an input image from the camera 8; further, the CPU 110 creates profile images 91 or 92 which are graphs representing the brightness profiles created, and displays the profile images 91 or 92 on the display 102. The captured two-dimensional image 20, and the associated profile images 91 and 92 are displayed on the same screen in FIG. 10. Additionally, a straight line 93H originating from the Y axis and extending in the main scanning direction, and a straight line 93V originating from the X axis and extending in the sub-scanning direction are displayed preferably superimposed on and in association with the two-dimensional image 20. The user may, for instance, drag the line 93H to translate the line 93H in the sub-scanning direction; the line 93 V may be translated in the same manner.

Here, assuming that the two-dimensional image 20 has a size m x n, for each coordinate y(i) (where i=0, 1, 2, 3,...n) on the Y-axis extending in the sub-scanning direction, the indicator acquisition unit 33 integrates the brightness of the pixels at the coordinates (0, y(i)) - (m, y(i)), and stores each coordinate y(i), and the integrated value in association with each other at a predetermined region in the main memory 112. Thus, data for the profile image 92 may be acquired, and using this acquired data, the output unit 34 may display a brightness profile image 92 on the display 102, which is represented by plotting a point for the integrated value at each coordinate y(i).

Additionally, the output unit 34 displays an image 921 on the profile image 92 indicating a point for the integrated value for a coordinate y(i) which is the origin of the line 93H on the display 102. When the line 93H is shifted in accordance with a user operation, the image 921 also moves in response thereto. Consequently, the point for the integrated value corresponding to a coordinate y(i) on the line 93H after the move is represented by the image 921 after the move.

While viewing the profile image 92, the user moves the line 93H and operates a "SET" button 94 when the line 93H is displayed at the desired location. For instance, the user operates the "SET" button when the image 921 indicates the largest integrated brightness value in the profile image 92. The CPU 110 stores the positional coordinate y(i) of the relevant line 93H in the two-dimensional image 20 in the main memory 112 using the operation details received by the input unit 31.

The line in the brightness profile may be set automatically, instead of being set manually by the user. For instance, setup may take place automatically instead of manually when the user presses an "AUTO" button 95. More specifically, the CPU 110 designates a line satisfying a predetermined condition (for example, a line indicating a maximum brightness) from among integrated brightness values corresponding to each line stored in the main memory 112. The CPU 110, for example, highlights the line image designated in the two-dimensional image 20, and guides the user. When the "SET" button 94 is operated when a line is highlighted, the CPU 110 stores the positional coordinate y(i) of the relevant line image in the two-dimensional image 20 in the main memory 112. Finally, the user may also modify the above mentioned predetermined conditions used for designating a line.

After the above mentioned manual setup or automatic setup is carried out, during the measurement mode the CPU 110 may create line selection data so that the line accessed in accordance with the selection signal (selection line in FIG. 9) is the line at the positional coordinate y(i) that was preliminarily stored during the adjustment mode (the imaging line in FIG. 9).

During the measurement mode that follows, when the line imaging control circuit 822 is activated in accordance with a switchover instruction from the image processing device 100 in order to use the camera 8 as a line camera, the image processing device 100 outputs an imaging instruction which includes the above described line selection data. The line imaging control circuit 822 generates a selection signal for accessing a pixel line specified by a line selection data in the imaging instruction, and accesses the area sensor 81 in accordance with the generated selection signal. Hereby a line image from a specific pixel line indicated by the line selection data is taken from the input unit 31 and stored in the image buffer 116a. The line image in the image buffer 116a is displayed on the display 102, or subjected to image processing. The selective designation of a specific pixel line in this manner may be realized by the functions of the designation unit in the CPU 110.

Thus when realized using the functions of the designation unit in the CPU, the lighting position is not made to coincide with a predetermined imaging line, rather, the imaging line may be designated in response to the lighting situation, and therefore, it is remarkably easier to set up the lighting.

Moreover, a cancel button may be provided which allows the user to revoke any manual or automatic setup performed, and to enter the setup operation once again by pressing the cancel button.

The Interface Facilitating Manual Setup

In the present embodiment a profile image 91 may be displayed in addition to, or separately from the profile image 92 to support the above described manual setup. For the line image indicated by the line 93H, the indicator acquisition unit 33 stores a coordinate x(j) (where j = 0, 1, 2, 3, ..., m) on the X axis extending in the main scanning direction, and the pixel brightness in association with each other in a predetermined region in the main memory 112. Thus, the data for the profile image 91 may be acquired, and using this acquired data, the output unit 34 outputs the profile image 91 to the display 102, expressed by plotting a point for the brightness value at each coordinate x(j). Finally, an image 911 is displayed in the profile image 91 indicating a brightness value corresponding to the coordinate x(j) which is the origin of the line 93V.

When the line 93V is moved, the image 922 is also moved to indicate the point of the brightness value at the position of the coordinate x(j) after the move.

When the user performs manual or automatic setup, the user adjusts the lighting device 9 using the brightness of the line image represented by the line 93H to perform the setup. More specifically, the user adjusts the attitude of the lighting device 9 so that a line representing the change in brightness along the main scanning direction for the line image represented by the profile image 91 in FIG. 10 is made as flat as possible.

As another display example for the profile image 91, a brightness profile image 91 may be displayed, expressed by plotting a point for the integrated value at each coordinate x(j). More specifically, the indicator acquisition unit 33 integrates the brightness of the pixels on the coordinates (x(j),0) - (x(j),n) for each coordinate on the X axis extending in the main scanning direction, and stores each coordinate x(j) and the integrated value in association with each other in a predetermined region in the main memory 112. Consequently, using the stored data, the output unit 34 may output a brightness profile image 91 to the display 102 which is expressed by plotting a point for the integrated value at each coordinate x(j). More specifically, when performing manual or automatic setup, the user adjusts the attitude of the lighting device 9 so that the line representing the change in brightness along the main scanning direction for the line image represented by the profile image 91 is made as straight as possible.

If the optical axis of the lighting device 9 is shifted from a predetermined orientation, the light is radiated on only one portion in the field of view with respect to the profile image 91, and the line represented by the profile image 91 becomes distorted. Consequently, the user adjusts the attitude of the lighting device 9 (radiation direction), and when the line is as straight as possible the user may determine that the lighting device 9 is at a suitable attitude such that the optical axis is along a predetermined direction.

When adjusting the attitude of the lighting device 9, although the indicator acquisition unit 33 may use the integrated brightness values for each line image as an indicator value represented by the profile image 92, the indicator acquisition unit 33 may also use a representative value for the brightness for each line image. Besides the integrated value, for instance, another value such as the mode or the median may be used as the representative value.

Facilitating Minute Focus Adjustments

In step M4, a user interface is presented for facilitating adjustment of the focus so that a selection line (refer to FIG. 9) may be brought into focus using the lighting setup support. FIG. 11 is a diagram illustrating an example of a display screen for facilitating focus adjustment according to an embodiment of the invention. The CPU 110 extracts the line image 19 in FIG. 11 which is a one-dimensional image corresponding to a certain position on the basis of the position of an imaging line stored in the main memory 112 during step M3 using the two-dimensional image 20 input from the camera 8.

The indicator acquisition unit 33 then acquires a focus value in a surrounding region 26 in the sub-scanning direction (for example, for $\pm$ 10 pixels) as an indicator value; the surrounding region 26 sandwiches the line image 19 which extends in the main scanning direction. The focus value represents a degree of adjustment of focus for whether or the camera 8 is focused on an object to be imaged, such as the work 2. In other words, the focus value corresponds to an indicator value used for evaluating the imaging state in the input image which is the two-dimensional image 20. The focus value has a proportional relationship with the amount of edges generated within the input image. Therefore, in the present embodiment the focus value is computed on the basis of the color variation in the input image. As an example, the focus value may be computed in accordance with the following formula (1).

Formula 1

$$\text{Focus value} \ = \sqrt{\sum_{C=R,G,B}\left\{ave(C^2) - ave(C)^2\right\}} \quad \cdots(1)$$

where,

ave(C) is an average of the concentration of a color C in a pixel included in the input image, and
ave($C^2$) is the squared average of the concentration of the color C in a pixel included in the input image.

The output unit 34 displays the two-dimensional image 20 on the display, and changes the display mode by, for instance, highlighting the images of the line image 19 and the surrounding region 26 over the two-dimensional image 20 on the display. The output unit 34 also displays the computed focus value in a window 30 on the same screen using a numerical value 28a, and a bar graph 28. The user may verify the size of the focus value for the line image 19 and the surrounding region 26 under the current imaging setup via the screen using the numerical value 28a, and the length of the bars in the bar graph 28. The larger the numerical value 28a, and the longer the bars, it may be determined that the higher degree of focus.

Additionally, the output unit 34 may display an icon 29 on the display 102 which represents a threshold necessary for ensuring accurate inspection, in association with the bar graph 28. The user may manipulate the focus adjustment ring on the camera 8 so that the length of the bar in the bar graph 28 extends beyond the position of the icon 29, thus setting the focus.

Advantages of Using the Line Camera During Measurement Mode During the adjustment mode, once the adjustments in steps M1-M4 are complete, the image processing device 100 transitions to the measurement mode.

During the measurement mode, images of the work 2 are captured with the line camera on the basis of the imaging setup completed during the previous adjustment mode while transporting the work 2 along the conveyance path, and the work 2 is inspected using the captured images. At this time, the line camera is able to capture images of the work 2 on the conveyance path where the optical axis of the camera 8 has an attitude that is orthogonal to the imaging field-of-view plane; therefore, the line camera is able to acquire a high-resolution image. For example, this setup is particularly advantageously adopted in the printing industry for inspections of sheet-like printed materials during a printing process, or for general viewing inspections of LCDs or PDPs for general view inspections.

Moreover, when the work 2 has a curved surface, one-dimensional images in the main scanning direction may be continuously captured in the sub-scanning direction, and the plurality of individual one-dimensional images captured may be combined to obtain a plane two-dimensional image. That is, when inspecting a solid object (a cylindrical object) having a curved surface that tends to be difficult to inspect with an area camera, using a line camera with the above mentioned imaging setup allows the acquisition of a two-dimensional image which facilitates various types of imaging processing, and thus improves the accuracy of inspection. This may also be up advantageously applied to bottle, label, or character printing defects inspection in the beverage industry.

Ideal examples of adoption of the camera 8 subject to the imaging setup according to the present embodiment used as a line camera include, for example: (1) external visual inspection and color separation of food products, (2) inspection of sheets like printed materials such as Prince and film, (3) defect detection for packages, (4) general visual inspection of LCD and PDP related materials such as liquid crystal products or class products glass products, (5) defect detection for drink bottle surfaces or the labels on said bottles, (6) defect detection for building materials or plywood composed of paper or wood, (7) external visual inspection of substrates or packaged substrates in electronics, (8) foreign particulate or type selection for metal ores, (9) separation of recycled goods such as paper, metal, and resin, and (10) while special purpose, horse racing, sprint cycling, or motorboat racing and the like.

Modification Example

While in the embodiment the camera 8, and the image processing function of the image processing device 100 are provided separately, the camera 8 and image processing function may be integrally configured and implemented as a visual inspection sensor.

All aspects of the embodiment disclosed should be considered merely example and not limitations as such. The scope of the present invention is not limited to the above description but to the description in the claims, and is intended to include all equivalents and modifications allowable by the claims.

Reference Numerals

| | |
|---|---|
| 1 | Visual sensor system |
| 2 | Work |
| 6 | Conveyance mechanism |
| 8 | Camera |
| 9 | Lighting device |
| 19 | Line image |
| 20 | Two-dimensional image |
| 31 | Input unit |
| 33 | Indicator acquisition unit |
| 34 | Output unit |
| 81 | Area sensor |

82     Control circuit
100    Image processing device
821    Area imaging control circuit
822    Line imaging control circuit

**Claims**

1. An image processing system comprising: an imaging device that captures an image of an object to be imaged, and an image processing device that is configured to be connected to the imaging device;
the imaging device comprising:

> an area-type imaging element including a plurality of pixels arranged in two dimensions;
> an area imaging control means that acquires a two-dimensional image from the plurality of pixels; and
> a line imaging control means that acquires a one-dimensional image from a predetermined specific pixel line from among the plurality of pixels in the area-type imaging element;

the image processing device comprising:

> a switchover control means that switches to and thus activates one of either the area imaging control means or the line imaging control means;
> an input means that takes in an image acquired by the imaging device;
> an indicator acquisition means that acquires an indicator value used to evaluate an imaging state of a specific pixel line in the plurality of pixels from the two-dimensional image taken in by the input means;
> an output means that outputs the two-dimensional image taken in by the input means, and the indicator value acquired by the indicator acquisition means; and
> a designation means that designates a specific pixel line from the plurality of pixels.

2. The image processing system according to claim 1 wherein the indicator value includes an angle formed between a line corresponding to the specific pixel line from the two-dimensional image, and an edge extracted from an image of the object being imaged in the two-dimensional image.

3. The image processing system according to claim 1 wherein the indicator value includes a brightness value for a line in a main scanning direction corresponding to the specific pixel line from the two-dimensional image.

4. The image processing system according to claim 3 wherein the output means outputs points representing each of the brightness values in the specific pixel line on a graph plotted in a sub-scanning direction which is orthogonal to the main scanning direction.

5. The image processing system according to claim 3 or 4 wherein the output means outputs points representing each of the brightness values in a specific pixel line extending in the sub-scanning direction which is orthogonal to the main scanning direction on a graph plotted in the main scanning direction.

6. The image processing system according to claim 1 further comprising: an operation input means that receives an external operation; wherein
the designation means designates the specific pixel line from among the plurality of pixels using operation content received from the operation input means.

7. The image processing system according to claim 3 wherein the designation means designates the specific pixel line from among the plurality of pixels using a brightness value.

8. The image processing system according to claim 1 wherein the indicator value includes a value which indicates a degree of adjustment to a focus of the imaging device in a region including the specific pixel line from among the two-dimensional image.

9. An image processing program which is configured to be run on a computer that may be connected to an imaging device that captures an image of an object to be imaged, and
the imaging device comprising:

an area-type imaging element including a plurality of pixels arranged in two dimensions;
an area imaging control means that acquires a two-dimensional image from a plurality of pixels;
a line imaging control means that acquires a one-dimensional image from a predetermined specific pixel line from among the plurality of pixels in the area-type imaging element;

the image processing program causing the computer to function as a device comprising:

a switchover control means that switches to and thus activates one of either the area imaging control means or the line imaging control means;
an input means that takes in an image acquired by the imaging device;
an indicator acquisition means that acquires an indicator value used to evaluate an imaging state of a specific pixel line in the plurality of pixels from the two-dimensional image taken in by the input means;
an output means that outputs the two-dimensional image taken in by the input means, and the indicator value acquired by the indicator acquisition means; and
a designation means that designates a specific pixel line from among the plurality of pixels.

EP 2 784 746 A1

FIG. 1

15

FIG. 2

(A)

```
                                        ┌──────────────────────┐
                                        │  ┌────────────────┐  │──8
                                        │  │   Area sensor  │  │──81
                                        │  └────────────────┘  │
                                        │          │           │
                                        │  ┌────────────────┐  │
                                        │  │    Control     │  │──82
                                        │  └────────────────┘  │
                                        │          │           │
                                        │  ┌────────────────┐  │
                                        │  │     Camera     │  │──83
                                        │  │   Interface    │  │
                                        │  └────────────────┘  │
                                        └──────────┬───────────┘
```

┌ ─ ─ ─ ─ ─ ─ ─ ─ ─ ─ ─ ─ ─ ─ ─ ─ ─ ─ ─ ─ ─ ─ ─ ─ ─ ─ ─ ─ ┐  ──100

| 110 | 112 | 116 | 114 |
|---|---|---|---|
| CPU | Main Memory | Camera Interface  Image Buffer ──116a | Hard disk |

128

| 118 | 120 | 122 | 124 | 126 |
|---|---|---|---|---|
| Input Interface | Display Controller | PLC Interface | Communication Interface | Data Reader-Writer |

└ ─ ─ ─ ─ ─ ─ ─ ─ ─ ─ ─ ─ ─ ─ ─ ─ ─ ─ ─ ─ ─ ─ ─ ─ ─ ─ ─ ─ ┘

105

| 104 | 102 | 5 | | 106 |
|---|---|---|---|---|
| Mouse  Input device | Display | PLC | console, etc. | Memory card |

(B)

To 81

Selectio

82

| Area imaging control circuit | ──821 |
| Line imaging control circuit | ──822 |

From 100 ⎰ • Imaging instruction
⎱ • Switchover instruction

FIG. 3

Input unit — 31

Indicator acquisition unit — 33

Output unit — 34

FIG. 4

START

M1 — Focus adjustment

M2 — Camera attitude setup

M3 — Lighting setup

M4 — Minute focus adjustments

END

FIG. 5

```
              ┌─────────────┐
              │    START    │
              └──────┬──────┘
                     │
         ┌───────────▼──────────┐
         │                      │  S1
    NO   ◆   Start adjustment?  ◆
    ◄────◆                      ◆
         └───────────┬──────────┘
                     │ YES
         ┌───────────▼──────────┐  S3
         │    Capture image     │
         └───────────┬──────────┘
                     │
         ┌───────────▼──────────┐  S5
         │     Extract edge     │
         └───────────┬──────────┘
                     │
         ┌───────────▼──────────┐  S7
         │     Specify edge     │
         └───────────┬──────────┘
                     │
         ┌───────────▼──────────┐  S9
         │  Display angle screen│
         └───────────┬──────────┘
                     │
      ┌ ─ ─ ─ ─ ─ ─ ─▼─ ─ ─ ─ ─ ─ ┐
      │ Adjust camera direction (XY)│
      └ ─ ─ ─ ─ ─ ─ ─┬─ ─ ─ ─ ─ ─ ┘
 (Image)             │
         ┌───────────▼──────────┐  S13
         │    Display screen     │
         └───────────┬──────────┘
                     │
         ┌───────────▼──────────┐  S15
(≠90 deg.)│                     │
    NO   ◆   End adjustment?    ◆
    ◄────◆                      ◆
         └───────────┬──────────┘
                     │ YES
                     │ (=90 deg.)
              ┌──────▼──────┐
              │     END     │
              └─────────────┘
```

FIG. 6

Angle with camera scanning direction: 80° (-10° remain)

Specify edge

Y

X

FIG. 7

```
                    ┌─────────────┐
                    │    START    │
                    └──────┬──────┘
                           │
            ┌ ─ ─ ─ ─ ─ ─ ─▼─ ─ ─ ─ ─ ─ ─ ┐
              Mount target work for setup
            └ ─ ─ ─ ─ ─ ─ ─┬─ ─ ─ ─ ─ ─ ─ ┘
                           │
          ┌────────────────▼──────┐  S1
    ◄─────◄    Start adjustment?   ◄
     NO    └────────┬─────────────┘
                    │ YES
          ┌─────────▼──────────┐  S3
          │   Capture image    │
          └─────────┬──────────┘
          ┌─────────▼──────────┐  S5a
          │ Extract edge and squares │
          └─────────┬──────────┘
          ┌─────────▼──────────┐  S6
    ─────►│ Measure current angle │
          └─────────┬──────────┘
          ┌─────────▼──────────┐  S9a
          │   Display screen   │
          └─────────┬──────────┘
          ┌ ─ ─ ─ ─ ▼ ─ ─ ─ ─ ┐  S11a
            Camera attitude XYθ
               Adjust angle
          └ ─ ─ ─ ─ ┬ ─ ─ ─ ─ ┘
                 (Image)
          ┌─────────▼──────────┐  S13a
          │   Display screen   │
          └─────────┬──────────┘
          ┌─────────▼──────────┐  S15
    ◄─────◄   End adjustment?   ◄
     NO    └────────┬───────────┘
                    │ YES
           ┌────────▼────────┐
           │      END        │
           └─────────────────┘
```

FIG. 8

Angle with camera scanning direction: 80° (+10° remain)
Angle with camera scanning direction: 3° (-3° remain)

FIG. 9

Selected line

Captured line

FIG. 10

FIG. 11

EP 2 784 746 A1

**EUROPEAN SEARCH REPORT**

Application Number

EP 14 15 6743

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JP 2004 147271 A (FOR A CO LTD) 20 May 2004 (2004-05-20) | 1,9 | INV. G06T1/00 |
| Y | * the whole document * * abstract * | 1-9 | G06T7/00 H04N5/232 H04N1/00 |
| X | JP 2011 248749 A (PANASONIC ELECTRIC WORKS SUNX) 8 December 2011 (2011-12-08) | 1,6,9 | H04N1/193 H04N1/195 |
| Y | * the whole document * * abstract * | 1-9 | H04N3/14 |
| Y | EP 0 516 449 A1 (SONY CORP [JP]) 2 December 1992 (1992-12-02) * the whole document * | 1-9 | |
| Y | US 2012/188381 A1 (VANUYTVEN EDDY [BE]) 26 July 2012 (2012-07-26) * figures 4,5 * * paragraph [0091] * | 1-9 | |
| Y | US 2007/058840 A1 (SINGH RAJESH K [US] ET AL SINGH RAJESH KUMAR [US] ET AL) 15 March 2007 (2007-03-15) * figures 3,5,10 * * paragraph [0044] * | 2 | |
| Y | US 2010/045824 A1 (KIDO TAKESHI [JP] ET AL) 25 February 2010 (2010-02-25) * figures 12, 13 * * paragraphs [0082] - [0088] * | 3-5,7 | TECHNICAL FIELDS SEARCHED (IPC) G06T H04N |
| Y | US 6 972 799 B1 (HASHIMOTO HITOSHI [JP]) 6 December 2005 (2005-12-06) * figures 2B , 9B * | 8 | |
| Y | US 2006/146174 A1 (HAGINO YOSHIO [JP]) 6 July 2006 (2006-07-06) * figures 5,7 * | 8 | |

The present search report has been drawn up for all claims

| Place of search | Date of completion of the search | Examiner |
|---|---|---|
| Munich | 24 July 2014 | Moorhouse, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

23

## ANNEX TO THE EUROPEAN SEARCH REPORT
## ON EUROPEAN PATENT APPLICATION NO.

EP 14 15 6743

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2014

| Patent document cited in search report | | Publication date | Patent family member(s) | | Publication date |
|---|---|---|---|---|---|
| JP 2004147271 | A | 20-05-2004 | NONE | | |
| JP 2011248749 | A | 08-12-2011 | NONE | | |
| EP 0516449 | A1 | 02-12-1992 | DE | 69217724 D1 | 10-04-1997 |
| | | | DE | 69217724 T2 | 12-06-1997 |
| | | | EP | 0516449 A1 | 02-12-1992 |
| | | | US | 5278657 A | 11-01-1994 |
| US 2012188381 | A1 | 26-07-2012 | EP | 2483751 A1 | 08-08-2012 |
| | | | ES | 2454390 T3 | 10-04-2014 |
| | | | US | 2012188381 A1 | 26-07-2012 |
| | | | WO | 2011039376 A1 | 07-04-2011 |
| US 2007058840 | A1 | 15-03-2007 | US | 2007058840 A1 | 15-03-2007 |
| | | | WO | 2007029196 A2 | 15-03-2007 |
| US 2010045824 | A1 | 25-02-2010 | JP | 4900343 B2 | 21-03-2012 |
| | | | JP | 2010050737 A | 04-03-2010 |
| | | | US | 2010045824 A1 | 25-02-2010 |
| US 6972799 | B1 | 06-12-2005 | JP | 3977906 B2 | 19-09-2007 |
| | | | JP | H11103412 A | 13-04-1999 |
| | | | US | 6972799 B1 | 06-12-2005 |
| US 2006146174 | A1 | 06-07-2006 | EP | 1593997 A1 | 09-11-2005 |
| | | | EP | 1750432 A1 | 07-02-2007 |
| | | | EP | 1750433 A1 | 07-02-2007 |
| | | | EP | 1750434 A1 | 07-02-2007 |
| | | | EP | 1903783 A2 | 26-03-2008 |
| | | | EP | 1903784 A2 | 26-03-2008 |
| | | | EP | 1912430 A2 | 16-04-2008 |
| | | | EP | 1940151 A2 | 02-07-2008 |
| | | | HK | 1091555 A1 | 05-06-2009 |
| | | | JP | 2004297751 A | 21-10-2004 |
| | | | KR | 20050105203 A | 03-11-2005 |
| | | | KR | 20060132019 A | 20-12-2006 |
| | | | KR | 20060132020 A | 20-12-2006 |
| | | | KR | 20060132021 A | 20-12-2006 |
| | | | KR | 20070028577 A | 12-03-2007 |
| | | | US | 2006146174 A1 | 06-07-2006 |
| | | | US | 2007065132 A1 | 22-03-2007 |
| | | | US | 2007092141 A1 | 26-04-2007 |
| | | | US | 2007094190 A1 | 26-04-2007 |
| | | | WO | 2004070469 A1 | 19-08-2004 |

EPO FORM P0459

For more details about this annex : see Official Journal of the European Patent Office, No. 12/82

**EP 2 784 746 A1**

REFERENCES CITED IN THE DESCRIPTION

**Patent documents cited in the description**

- JP 2004147271 A

- JP 2009194424 A